# EUROPEAN PATENT APPLICATION

(11) **EP 2 484 963 A1**
(43) Date of publication of application: **08.08.2012**
(21) Application number: 10820608.7
(22) Date of filing: 29.09.2010
(51) Int. Cl.: F21V 9/10, F21S 2/00, F21Y 101/02

(54) **COLOR CORRECTION METHOD FOR ILLUMINATION LIGHT, AND LIGHT SOURCE MODULE AND LIGHTING DEVICE USING THIS COLOR CORRECTION METHOD**

(30) Priority: 01.10.2009 JP 2009229950
(71) Applicant: Opto Design, Inc., Hachioji-shi, Tokyo 192-0364 (JP)
(72) Inventor: SATO, Eiichi, Hachioji-shi Tokyo 192-0364 (JP); FUKUOKA, Kenji, Fussa-shi Tokyo 197-0013 (JP)
(74) Representative: HOFFMANN EITLE
(86) International application number: PCT/JP2010/066995
(87) International publication number: WO 2011/040493

(57) **Abstract**

Provided is a lighting device capable of correcting loss of color balance of illumination light that tends to occur among a plurality of light source modules and providing uniform illumination light of the same color. A lighting device 1 including a plurality of light source modules 2A to 2D corrects the color of light emitted from each light source module to emit uniform illumination light of the same color. Each of the light source modules 2A to 2D includes: first light source modules 2B to 2D that each have a point light source 3 emitting light of a color having a plurality of wavelength components, a casing 4 accommodating therein the point light source, provided with an opening, and having an interior with a reflection surface, and an optical reflective member covering the opening of the casing and emitting uniform surface illumination light; and a second light source module 2A that is the first light source module further equipped with a color correcting member 7 adjusting a spectrum of the light emitted from the corresponding point light source.

## Description

### TECHNICAL FIELD

The present invention relates to a color correction method for illumination light, a light source module using this color correction method, and a lighting device including the light source module. More particularly, the invention relates to a color correction method for illumination light capable of correcting loss of color balance of illumination light that tends to occur between a plurality of light source modules when each of the light source modules is equipped with a point light source as a light source and providing uniform illumination light of the same color having a relatively large area, and relates to a light source module using this color correction method and a lighting device including the light source module.

### BACKGROUND ART

In recent years, research and development of light emitting diodes (hereinafter referred to as "LEDs") have rapidly advanced. Various types of LEDs have been developed and implemented, and are used in a wide range of fields. These LEDs have also started to be used in the fields of illumination. In the fields of illumination, recently, LEDs are used for lighting devices such as a backlight of a liquid crystal panel, various types of display boards, and an electrical bulletin board.

The Applicant of the present application has developed and implemented surface lighting devices using a plurality of LEDs that provide uniform surface illumination light having a relatively large area. Patent Document 1 listed below is an application filed by the Applicant.

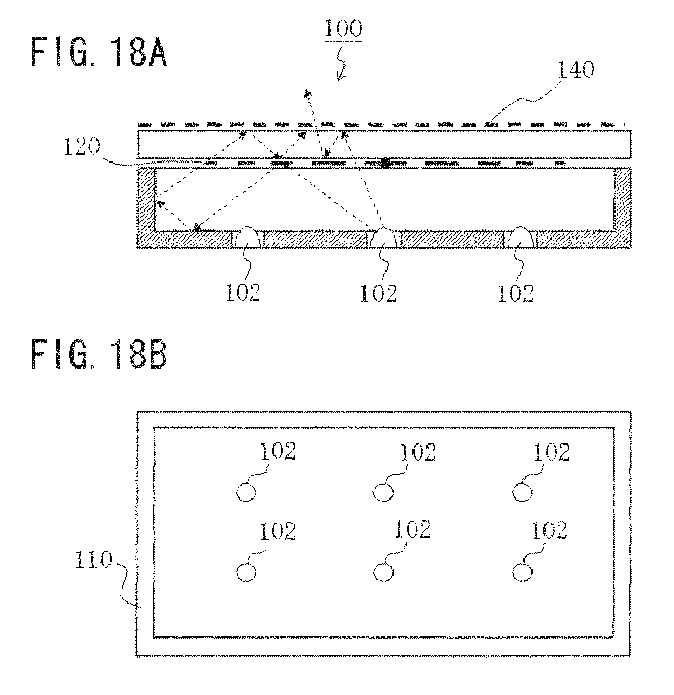

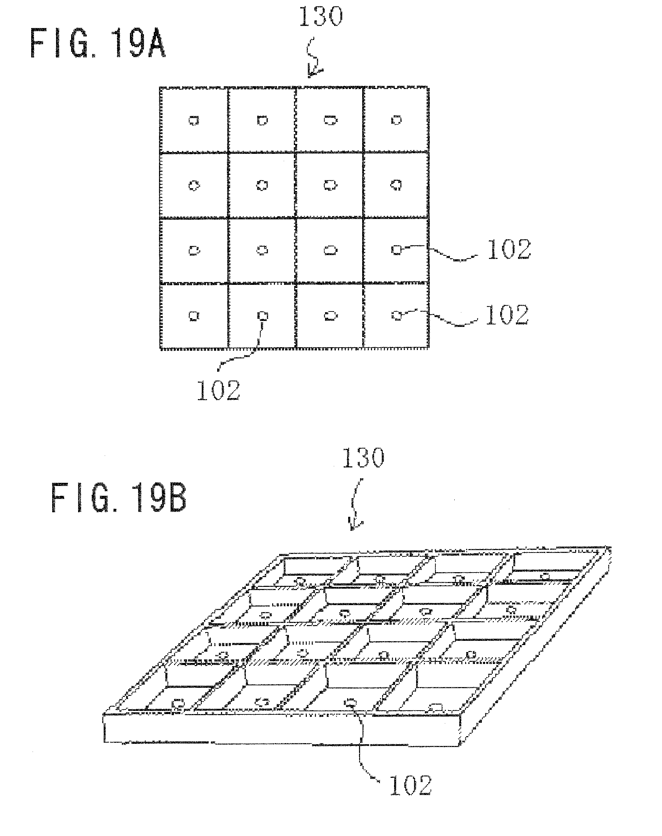

Surface lighting devices described in Patent Document 1 will be described with reference to Figs. 18 and 19. Figs. 18 and 19 illustrate two embodiments of surface lighting devices out of a plurality of embodiments described in Patent Document 1. Fig. 18A is a vertical sectional view of an embodiment. Fig. 18B is a plan view of the surface lighting device depicted in Fig. 18A. Fig. 19A is a plan view of another embodiment. Fig. 19B is a perspective view of the surface lighting device depicted in Fig. 19A.

As illustrated in Fig. 18, one surface lighting device 100 includes a plurality of LEDs 102, a casing 110 having a box shape with a bottom plate provided with the LEDs arranged in a matrix and an upper side provided with an opening, a first radiating-side reflection unit 120 covering the opening of the casing, and a second radiating-side reflection unit 140 disposed over the first radiating-side reflection unit 120 with a predetermined gap.

In the surface lighting device 100, light from the LEDs 102 is reflected on inner walls of the casing and the light reflected is further reflected between the first radiating-side reflection unit and the second radiating-side reflection unit. Thus, uniform illumination light can be provided from an emission surface of the second radiating-side reflection unit.

As illustrated in Fig. 19, another surface lighting device 130 includes a casing having a box shape whose interior is partitioned with grid-like partitions into a plurality of cells each of which has an LED. This surface lighting device 130 can achieve the same effect as the surface lighting device 100.

### PRIOR ART DOCUMENTS

### PATENT DOCUMENTS

Patent Document 1: Japanese Patent Application Publication No. 2008-27886 (paragraphs [0128] to [0131] and [0144], and Figs. 20 and 25)

### SUMMARY OF THE INVENTION

### PROBLEMS TO BE SOLVED BY THE INVENTION

Both of the surface lighting devices 100 and 130 are designed and implemented so as to provide uniform illumination light having a relatively large area. However, it has been found that the illumination light emitted from actual products lacks uniformity and its color balance is collapsed. The defects are caused by the surface lighting devices equipped with a plurality of LEDs. The plurality of LEDs each have elements with specific characteristics that are not always identical with each other. That is, there are small degrees of difference in the specific characteristics, so called variations of specific characteristics. Consequently, the surface lighting devices always entail variations of specific characteristics, which lead to the defects.

Typical illumination light is white light. Conventionally, LEDs that emit light of the three primary colors, i.e., R (red), G (green), and B (blue) are used for providing such white light by turning on the LEDs simultaneously or time-divisionally and synthesizing light emitted from each LED. Recently, however, a single LED that is capable of emitting white light is developed and implemented. In addition, an LED that is capable of emitting light of various colors such as R, G, B, Y (yellow), and P (purple) using aluminum gallium arsenide, gallium arsenide phosphide, indium gallium nitride, zinc selenide, silicon carbide, and sapphire (Al₂O₃) as the material thereof has already been implemented.

Such LEDs emit light of a color within the area surrounded by the curve of the x-y chromaticity diagram of the Commission Internationale de l'Eclairage (CIE) color system illustrated in Fig. 10. In the chromaticity diagram, for example, an area W corresponds to an area of white light. As illustrated in Fig. 11, the area W is further divided into a plurality of sub-areas, for example, a cool white area W1, a neutral white area W2, and a warm white area W3. As illustrated in Fig. 13, each of the areas W1 to W3 is further divided into divisions a₁ to a₄ and b₁ to b₄. Each of the fragmented divisions is also referred to as a bin. Each LED manufacturer determines a classification of bins, and there is no common classification between the LED manufacturers. In addition, classification has not satisfied standardized yet.

When an apparatus manufacturer using LEDs requires LEDs emitting a predetermined color in a predetermined bin such as white light, an LED manufacturer produces LEDs associated with the predetermined bin. With the present technology of LEDs, characteristics of an LED product vary under manufacturing conditions such as raw materials, manufacturing equipment, manufacturing environment, and a production lot. Thus, not a few LED products are out of the predetermined bin as a target. In addition, even if LED products are manufactured under the same condition, there are inevitable variations in characteristics among the products. Such variations are also called tolerance. The LED manufacturer examines characteristics of each LED product manufactured and classifies each product into a bin with predetermined characteristics based on the result of examination.

Individual classifications of bins are also respectively determined by each LED manufacturer and are not integrated. Thus, for the apparatus manufacturer, it is not easy to obtain LED products having the same characteristics even from the same LED manufacturer. In addition, if the apparatus manufacturer obtains LED products from another LED manufacturer, it is hard to match bins with each other as the bins are not standardized. Naturally, there is a tolerance in the same bin, and thus, it may not be able to obtain products with the same characteristics. Accordingly, even if the same kinds of white light LED products are used, as described above, there is a tolerance in the same bin that the same LED manufacturer determines, and it is hard to match bins between LED manufacturers. Hence, the color of emitted light can be different, for example, one LED may provide white tinted with blue, and another LED may provide white tinted with yellow. It could make it difficult to provide desirable white illumination light due to contamination of colors other than white. It should be noted that illumination light of colors other than white may cause a similar phenomenon.

The surface lighting device described in Patent Document 1 uses a plurality of LEDs and it may cause difference of color balance of illumination light between each light source module, so called loss of color balance. Occurrence of the loss of color balance can deteriorate the quality of illumination light or display and cause uncomfortable or discomfort feeling annoying people. As a method of solving the problems, a method using various filters and a method dimming light by electric control are possible. However, the method using filters is difficult to adopt because it requires color adjustment to each of the LEDs and the adjustment is complicated. Although a dimmer provides individual adjustments by electric control, thereby making the adjustments easy, for example, it entails such problems as a complicated control circuit and high cost.

Furthermore, it has been found that the surface lighting devices 100 and 130 in Patent Document 1 cannot provide uniform illumination light. In addition, in a relatively large area, their emission surfaces have bright parts or areas and dark parts or areas, causing contrast or difference of brightness between the parts or areas. Through the investigation of the cause, it has been found the following . The shape of a casing of a lighting device may be changed for its purpose. However, if a plurality of LEDs are not aligned with proper balance at equal intervals inside the casing whose shape is changed, the LEDs are not equally placed, and spots where the LEDs are unevenly distributed appear. Accordingly, dispersion of light from the plurality of LEDs is not even.

That is, if the casing has a rectangular box shape like the surface lighting device 130, it is possible to partition the interior of the casing into a plurality of cells with the same size. By installing an LED in each cell having the same shape, the amount of the light emitted from each cell is almost the same with each other. As a result, uniform illumination light can be obtained. It should be noted that the surface lighting device 100 can be provided with a plurality of LEDs in proper balance.

A relationship between a casing and cells will be considered. If the shapes of the casing and the cells are similar, the casing can be partitioned into cells with the same size. By contrast, if the casing and the cells do not have similar shapes, for example, the casing is formed in an ellipse and the interior of the casing is partitioned with grid-like partitions, the shapes of cells in the center portion and cells along the side wall part are different. In other words, the cells in the center portion are substantially cuboids with square surfaces while the cells along the side wall part have shapes that are not square. Naturally, their capacities are different from each other. Installing LEDs having the same performance in these cells can lead to a result that the amount of the light emitted from a cell with a smaller capacity is larger than the amount of light emitted from a cell with a larger capacity. Thus, one cell part becomes brighter and another cell part becomes darker, thereby producing contrast. As a method of suppressing generation of such contrast, a method dividing each cell into the same size and a method controlling the amount of light from LEDs electrically are possible. However, implementation of either of these methods is difficult and the costs are high.

As described above, obtaining illumination light having a large area using a plurality of LEDs can cause contrast, difference of brightness or loss of color balance due to the reason mentioned above. The problems remain inevitably in conventional technologies of LEDs and are difficult to be solved. Thus, the Inventors have examined the possibility of providing uniform illumination light of the same color having a large area using a plurality of LEDs without any countermeasures for or electric control on the LEDs. As a result, the facts described below have been found out. An LED has higher directivity than that of other light sources such as a light bulb and a fluorescent light tube and emits light with high brightness that can hurt eyes by direct sight. Disposing a light adjusting member, for example, a color correcting member, namely, a color complementing member or an absorptive member, with a predetermined size on a reflection path to reflect or multi-reflect the light emitted from the LED, color balance can be corrected with light reflected by the color complementing member, or contrast and difference of brightness can be adjusted by absorbing the light with the absorptive member. The present invention has been completed based on these facts.

An object of the present invention is to provide a color correction method for illumination light capable of correcting loss of color balance of illumination light that tends to occur between a plurality of light source modules when the light source modules are each equipped with a point light source as a light source without any countermeasures for elements of the point light source and providing uniform illumination light of the same color, a light source module using this color correction method, and a lighting device capable of allowing easy adjustment and providing desired uniform illumination light.

### MEANS FOR SOLVING THE PROBLEMS

For achieving the object described above, a color correction method for illumination light according to a first aspect of the present invention includes: providing a plurality of light source modules; adjusting illumination light from the light source modules so as to be the same color; and emitting uniform illumination light of the same color entirely. Each of the light source modules includes: a point light source emitting light of a color having a plurality of wavelength components; a casing accommodating therein the point light source, provided with an opening, and having an interior with a reflection surface; and an optical reflective member covering the opening of the casing and emitting uniform surface illumination light.
The light source modules are equipped with a color correcting member adjusting a spectrum of the light emitted from the corresponding point light source depending on necessity of color adjustment. The color correcting member is irradiated with the light emitted from the point light source and light reflected and adjusts a spectrum of the incident light into a desired spectrum, so that the color of the illumination light is corrected to be the same as that from the other light source modules and the light source modules emit uniform illumination light.

In a second aspect of the present invention, in the color correction method for illumination light according to the first aspect, the color correcting member may include a member colored in a color represented by coordinates on a half-line on a linear line passing through first coordinates in which the spectrum of the point light source in the x-y chromaticity diagram of the CIE standard colorimetric system is indicated and second coordinates in which a desired color in the x-y chromaticity diagram of the CIE standard colorimetric system is indicated, and extending from the second coordinates indicating the desired color to the opposite side of the first coordinates indicating the spectrum of the point light source.

In a third aspect of the present invention, in the color correction method for illumination light according to the first aspect, the color correcting member may change the size of an irradiated area irradiated with the light emitted from the point light source and the light reflected so as to adjust the amount of color correction.

In a fourth aspect of the present invention, in the color correction method for illumination light according to any one of the first to the third aspects, the point light source may be a light emitting diode or a laser diode.

For achieving the object described above, a light source module according to a fifth aspect of the present invention includes: a point light source emitting light of a color having a plurality of wavelength components; a casing accommodating therein the point light source, provided with an opening, and having an interior with a reflection surface; and a transmissive/reflective member covering the opening of the casing and emitting uniform surface illumination light, the casing being equipped with a color correcting member arranged therein and adjusting a spectrum of the light emitted from the point light source.

In a sixth aspect of the present invention, in the light source module according to the fifth aspect, the color correcting member may include a member colored in a color represented by coordinates on a half-line on a linear line passing through first coordinates in which the spectrum of the point light source in the x-y chromaticity diagram of the CIE standard colorimetric system is indicated and second coordinates in which a desired color in the x-y chromaticity diagram of the CIE standard colorimetric system is indicated, and extending from the second coordinates indicating the desired color to the opposite side of the first coordinates indicating the spectrum of the point light source.

In a seventh aspect of the present invention, in the light source module according to the fifth aspect, the color correcting member may be connected to an adjusting unit for changing the size of an irradiated area irradiated with the light emitted from the point light source and the light reflected so as to adjust an amount of color correction.

In an eighth aspect of the present invention, in the light source module according to any one of the fifth to the seventh aspects, the point light source may be a light emitting diode or a laser diode.

For achieving the object described above, a lighting device according to a ninth aspect of the present invention includes a plurality of light source modules, the lighting device changes a color of light emitted from each of the light source modules into a desired color and emits illumination light, the light source modules each are any one of the light source modules according to the fifth to the eighth aspects.

A lighting device according to a tenth aspect of the present invention includes: a plurality of light source modules, the lighting device changes a color of light emitted from each of the light source modules into the same color and emits uniform illumination light. Each of the light source modules includes: a first light source module having a point light source emitting light of a color having a plurality of wavelength components, a casing accommodating therein the point light source, provided with an opening, and having an interior with a reflection surface, and an optical reflective member covering the opening of the casing and emitting uniform surface illumination light; and a second light source module that is any one of the light source modules according to the fifth to the eighth aspects.

In an eleventh aspect of the present invention, in the lighting device according to the tenth aspect, the optical reflective member may be comprised of a common member with the first and the second light source modules.

For achieving the object described above, a lighting device according to a twelfth aspect of the present invention includes: a point light source; a box-shaped casing having a bottom plate to which the point light source is fixed, a side wall part standing to a predetermined height from a periphery of the bottom plate and defining an opening on an upper side thereof, and an inner wall with a reflective member; a transmissive/reflective member covering the opening of the casing and reflecting and transmitting the light emitted from the point light source; and a diffusive member disposed over the transmissive/reflective member with a gap therebetween. The casing is provided with a plurality of such point light sources that are arranged with predetermined intervals on the bottom plate, and is provided with a reflection light amount adjusting member that is disposed on a peripheral part around at least one of the point light sources and adjusts an amount of light reflected by the peripheral part.

In a thirteenth aspect of the present invention in the lighting device according to the twelfth aspect, an interior of the casing may be partitioned into a plurality of cells with small openings subdividing the opening of the casing with a partition reflective member that is a reflective member standing to a predetermined height from the bottom plate, the point light sources are disposed in the respective cells, and the reflection light amount adjusting member may be disposed in at least one of the cells.

In a fourteenth aspect of the present invention, in the lighting device according to the twelfth aspect, the reflection light amount adjusting member may be a color correcting member correcting a spectrum of light emitted from the point light sources.

In a fifteenth aspect of the present invention, in the lighting device according to the twelfth aspect, the refection light amount adjusting member may be a reflection light amount adjusting member adjusting the amount of light reflected by the peripheral part around the point light source(s).

In a sixteenth aspect of the present invention, in the lighting device according to the thirteenth aspect, the shapes of the casing and the cells may be not similar, and a cell with a smaller capacity out of the cells may be equipped with the reflection light amount adjusting member.

In a seventeenth aspect of the present invention, in the lighting device according to the twelfth aspect, the reflection light amount adjusting member may be made of an optically absorptive material for absorbing light.

In an eighteenth aspect of the present invention, in the lighting device according to the seventeenth aspect of the invention, the optically absorptive material may be a sheet material.

In a nineteenth aspect of the present invention, in the lighting device according to the twelfth aspect, the reflection light amount adjusting member may be connected to an adjusting unit capable of adjusting an exposed area on the inner wall of the casing.

In a twentieth aspect of the present invention, in the lighting device according to the twelfth aspect, the transmiss-ve/reflective member may include a center reflective portion just above the corresponding point light source and an outer reflective portion around the center reflective portion. The center reflective portion may have high reflectance, and the outer reflective portion may be provided with a plurality of light transmission holes or light transmission slits penetrating the outer reflective portion.

In a twenty-first aspect of the present invention, in the lighting device according to any one of the twelfth to the twentieth aspects, both the casing and the transmissive/reflective member may be formed of an ultra-fine foamed material.

### EFFECT OF THE INVENTION

With the color correction method for illumination light according to the first aspect of the present invention, it is easy to correct loss of color balance of illumination light that tends to occur between a plurality of light source modules when each of the light source modules is equipped with a point light source as a light source without any countermeasures for elements of the point light source and to obtain uniform illumination light of the same color.

With the color correction method for illumination light according to the second aspect of the present invention, it is possible to correct a color to a desired color using the color correcting member that includes the member colored in a color represented by the coordinates on the half-line on the linear line passing through the first coordinates in which the spectrum of the point light source in the x-y chromaticity diagram of the CIE standard colorimetric system is indicated and the second coordinates in which the desired color in the x-y chromaticity diagram of the CIE standard colorimetric system is indicated, and extending from the second coordinates indicating the desired color to the opposite side of the first coordinates indicating the spectrum of the point light source. For example, by applying the color correcting member colored in yellow to a spectrum of white light tinted with blue, a tinge of blue is vanished and it is possible to obtain white illumination light.

With the color correction method for illumination light according to the third aspect of the present invention, it is possible to quite easily perform color correction since the color correcting member changes the size of the irradiated area irradiated with the light emitted from the point light source and the light reflected so as to adjust the amount of color correction.

With the color correction method for illumination light according to the fourth aspect of the present invention, even if the point light source is a point light source such as a light emitting diode or a laser diode, it is possible to perform color correction easy without any countermeasures for these light emitting elements and to obtain uniform illumination light of the same color.

With the light source module according to the fifth aspect of the present invention, it is possible to easily correct loss of color balance of illumination light that tends to occur between a plurality of light source modules when each of the light source modules is equipped with the point light source as the light source without any countermeasures for elements of the point light source and providing uniform illumination light of the same color.

With the light source module according to the sixth aspect of the present invention, it is possible to provide a light source module that allows easy color correction to provide a desired color by using the color correcting member that includes the member colored in a color represented by the coordinates on the half-line on the linear line passing through the first coordinates in which the spectrum of the point light source in the x-y chromaticity diagram of the CIE standard colorimetric system is indicated and the second coordinates in which the desired color in the x-y chromaticity diagram of the CIE standard colorimetric system is indicated, and extending from the second coordinates indicating the desired color to the opposite side of the first coordinates indicating the spectrum of the point light source.

With the light source module according to the seventh aspect of the present invention, it is possible to provide a light source module that allows quite easy color correction since the color correcting member changes the size of the irradiated area irradiated with the light emitted from the point light source and the light reflected so as to adjust the amount of color correction.

With the light source module according to the eighth aspect of the present invention, even if the point light source is a point light source such as a light emitting diode or a laser diode, it is possible to perform color correction easy without any countermeasures for these light emitting elements and to obtain uniform illumination light of the same color.

With the lighting device according to the ninth aspect of the present invention, the lighting device is an assembly of the plurality of light source modules, and it is possible to change the color of light emitted from each light source module to a desired color by disposing the color correcting member without replacing the point light source.

With the lighting device according to the tenth aspect of the present invention, the lighting device is an assembly of the plurality of the light source modules, and it is possible to provide uniform illumination light of the same color from the lighting device as a whole by disposing the color correcting member to the light source modules even if there are LEDs having different specific characteristics from each other installed in the light source modules. In addition, it is possible to use a colored material having any shape and size such as a colored sheet material or a colored adhesive tape material as the color correcting member. Thus, commercial products can be used as the color correcting member and it is possible to perform color correction easily.

With the lighting device according to the eleventh aspect of the present invention, the optical reflective member is a common member with the first and the second light source modules. Thus, for example, handling of the lighting device and assembling the lighting device can be easy.

With the lighting device according to the twelfth aspect of the present invention, the point light source provided with the reflection light amount adjusting member on the peripheral part out of the plurality of point light sources can adjust the amount of the light reflected by itself, which makes it possible to adjust the amount of the light itself to the light amount of other point light sources. Thus, it is possible to obtain illumination light with uniform brightness.

With the lighting device according to the thirteenth aspect of the present invention, the cell provided with the reflection light amount adjusting member out of the plurality of cells can adjust the amount of the light from itself. This allows adjustment of the amount of light to the light amount of other cells. Thus, it is possible to obtain illumination light with uniform brightness.

With the lighting device according to the fourteenth aspect of the present invention, the spectrum of the light emitted from the point light source is adjusted with the color correcting member. It is therefore possible to easily produce a lighting device that emits light of any color.

With the lighting device according to the fifteenth aspect of the present invention, the reflection light amount adjusting member adjusting the amount of the light reflected by the peripheral part around the point light source is used. Thus, it is possible to readily obtain illumination light with uniform brightness.

With the lighting device according to the sixteenth aspect of the present invention, when the shapes of the casing and the cells are not similar, the cells having different capacity from each other are created. However, since such cells are provided with the reflection light amount adjusting member, it makes it possible to adjust the amount of the light reflected by themselves to the light amount of other cells. Thus, it is possible to obtain illumination light with uniform brightness.

With the lighting device according to the seventeenth aspect of the present invention, the reflection light amount adjusting member is made of an optically absorptive material that is readily available. Thus, it is possible to easily adjust the amount of light.

With the lighting device according to the eighteenth aspect of the present invention, since the optically absorptive material is a sheet material, installation in the casing is easy.

With the lighting device according to the nineteenth aspect of the present invention, adjustment of the amount of light is easy even after assembly of the lighting device.

With the lighting device according to the twentieth aspect of the present invention, even if a point light source such as a light emitting diode and a laser diode is used, it is possible to provide uniform illumination light without leaving a bright spot on the center portion or darkening just above the point light source.

With the lighting device according to the twenty-first aspect of the present invention, the casing and the transmissive/reflective member are formed of the same material. It is therefore possible to form the casing and the partition with a single material and make their production easy.

### BRIEF DESCRIPTION OF THE DRAWINGS

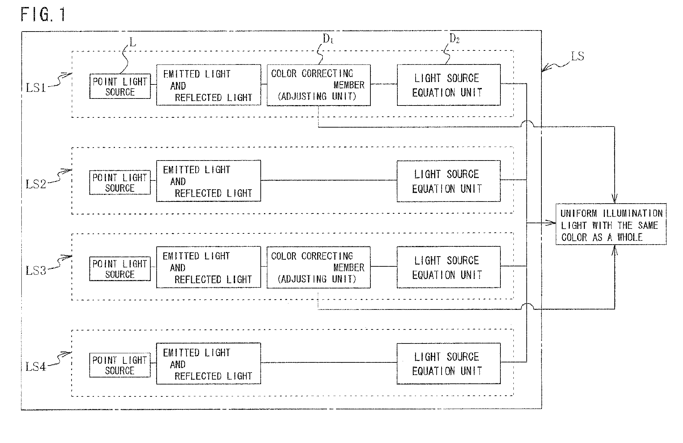

[Fig. 1] Fig. 1 is a block diagram illustrating a color correction method for illumination light according to an embodiment of the present invention.

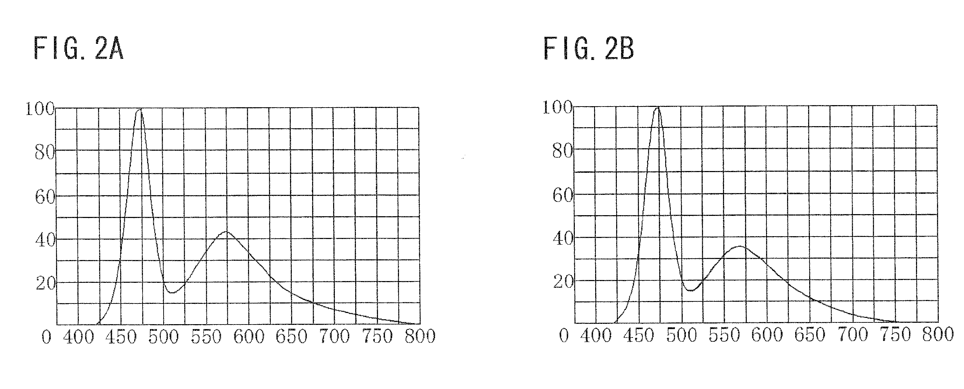

[Fig. 2] Fig. 2A is a chart showing an example of a spectrum of the white light emitted from a white light LED and Fig. 2B is a chart showing an example of a spectrum of the light from an LED emitting white light tinted with blue.

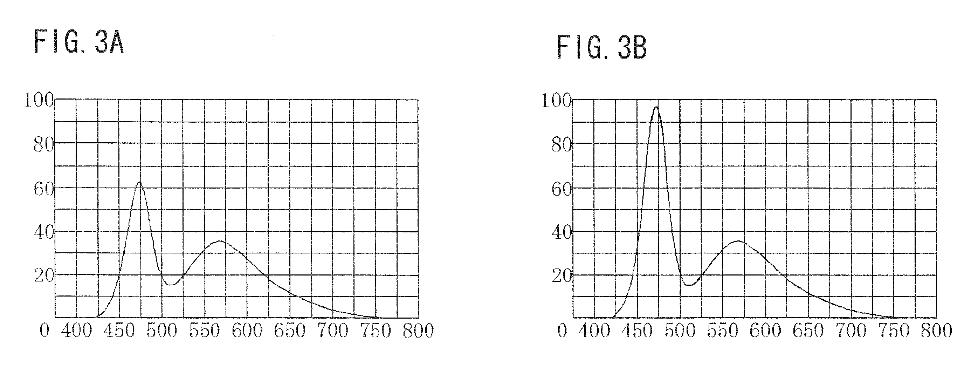

[Fig. 3] Fig. 3A is a chart showing a spectrum of the light reflected by a color correcting member disposed on a light source module according to the embodiment of the present invention and Fig. 3B is a chart showing a spectrum of the light emitted from the light source module of the present invention.

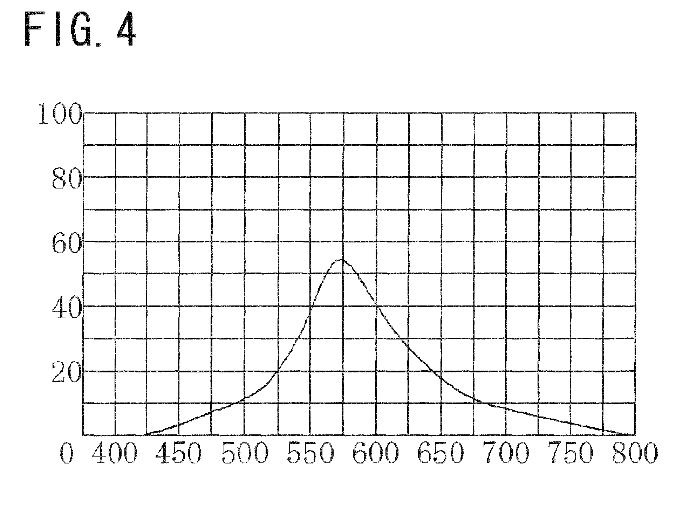

[Fig. 4] Fig. 4 is a chart showing a spectrum of the light reflected by a color correcting member made from a phosphor disposed on the light source module according to the present invention.

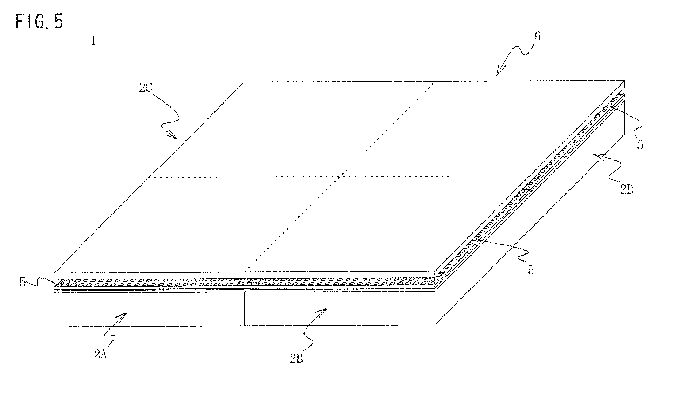

[Fig. 5] Fig. 5 is an overall perspective view of a lighting device having a plurality of light source modules according to the embodiment of the present invention.

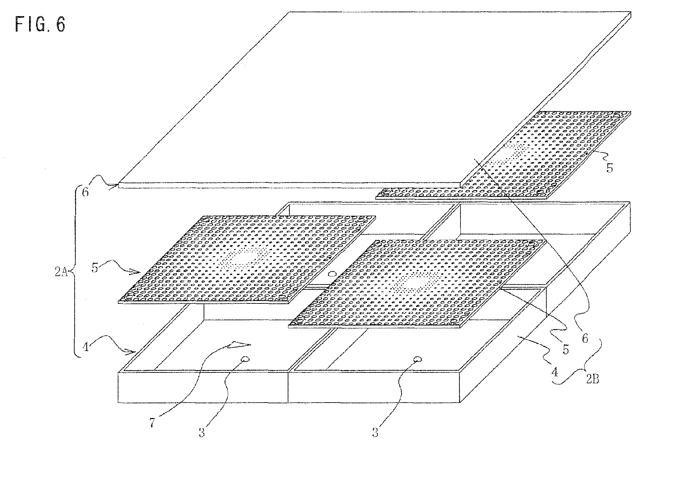

[Fig. 6] Fig. 6 is an exploded perspective view of the lighting device in Fig. 5.

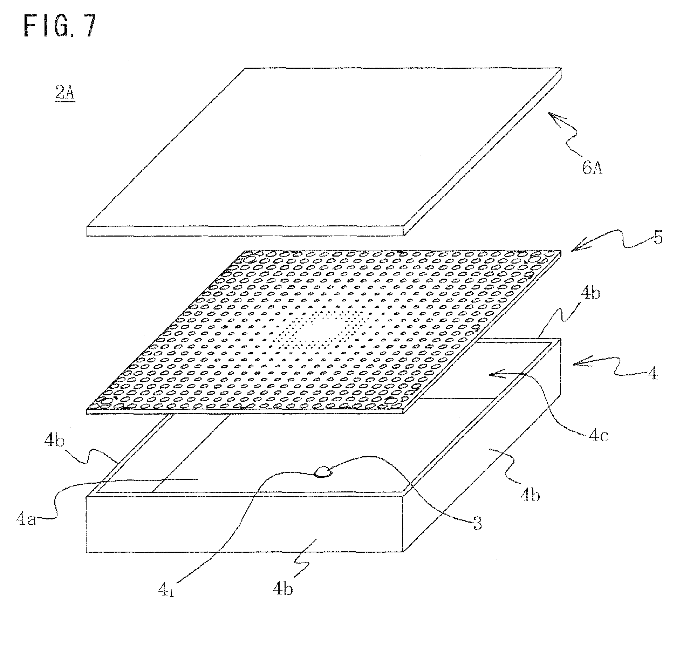

[Fig. 7] Fig. 7 is an exploded perspective view of a single light source module constituting the lighting device in Fig. 5.

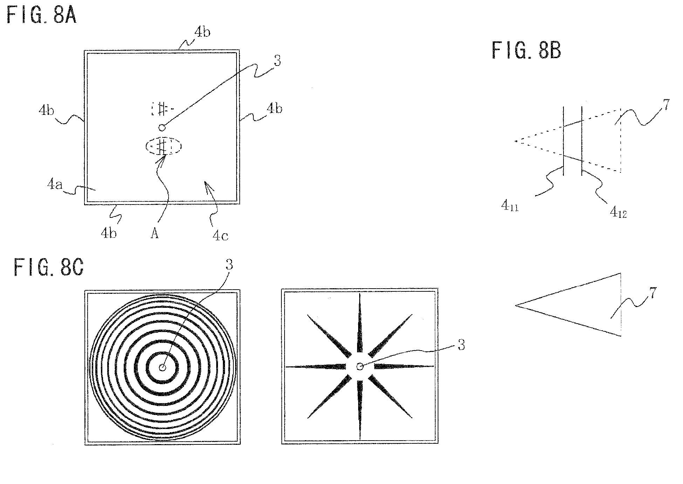

[Fig. 8] Fig. 8 is a top plan view of a casing provided with the color correcting member.

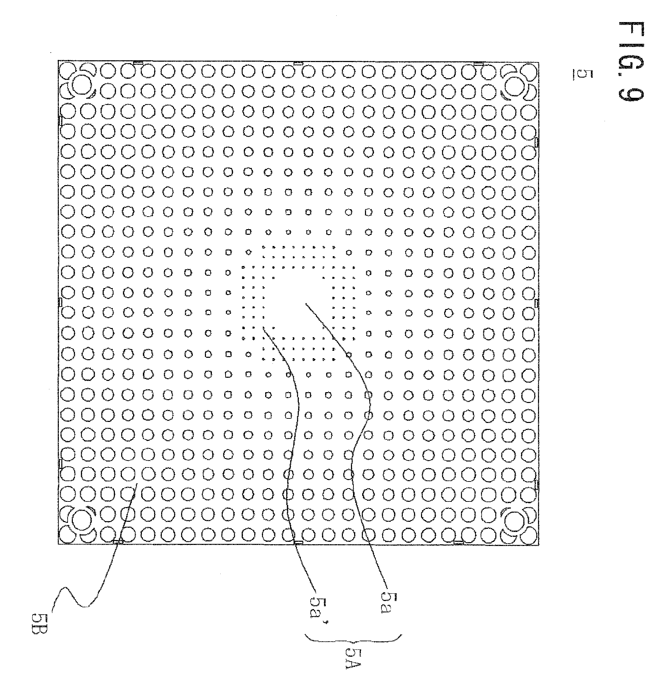

[Fig. 9] Fig. 9 is a plan view of a transmissive/reflective member in Fig. 6.

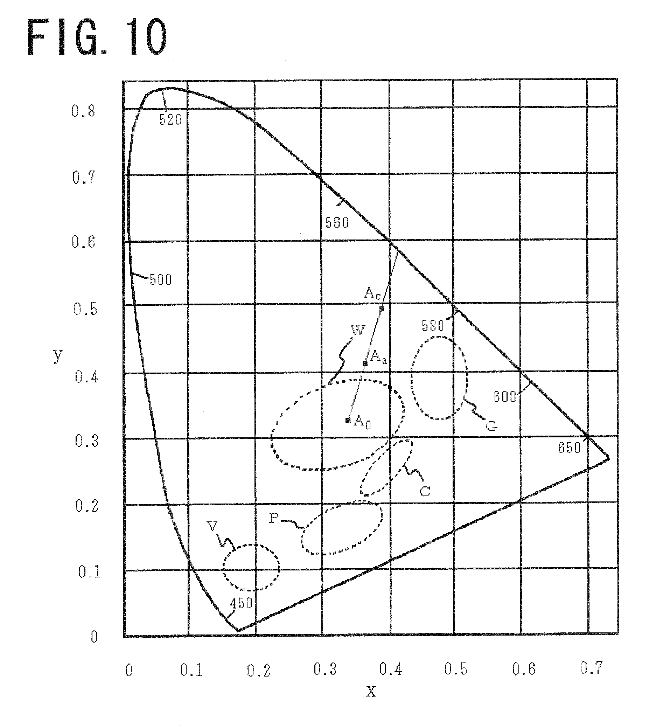

[Fig. 10] Fig. 10 is a known x-y chromaticity diagram of the CIE color system.

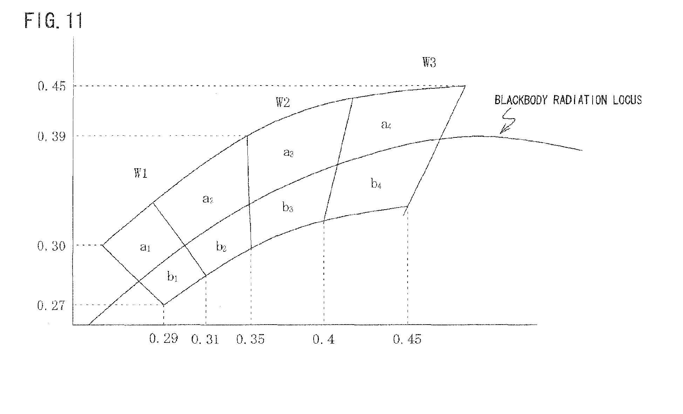

[Fig. 11] Fig. 11 is a partially enlarged view of the x-y chromaticity diagram in Fig. 10.

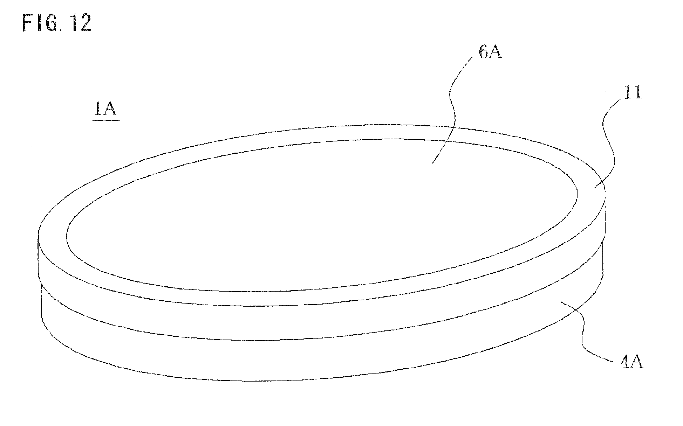

[Fig. 12] Fig. 12 is a perspective view of an exterior of the lighting device according to the embodiment of the present invention.

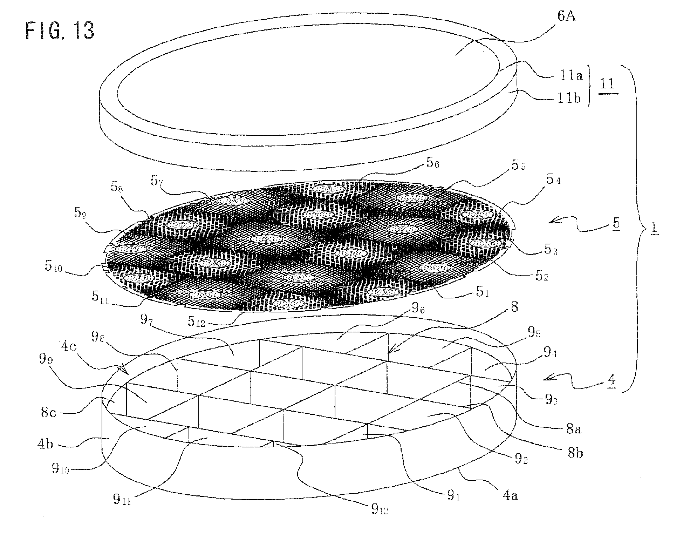

[Fig. 13] Fig. 13 is an exploded perspective view of the lighting device in Fig. 12.

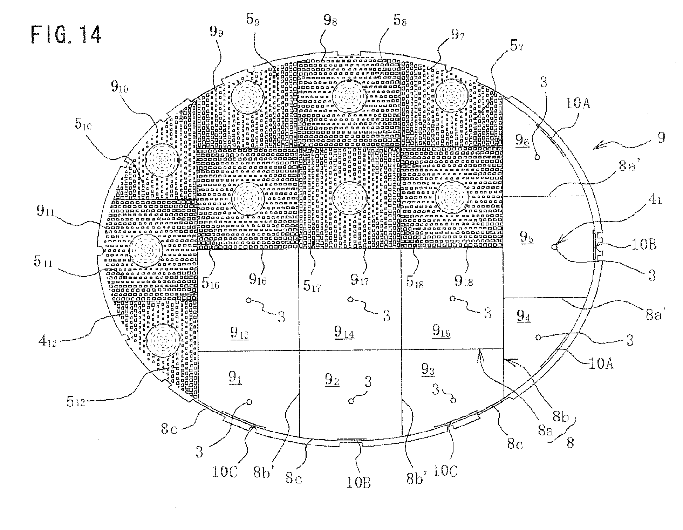

[Fig. 14] Fig. 14 is a top plan view of a status that the transmissive/reflective member is attached to the casing of the lighting device in Fig. 13.

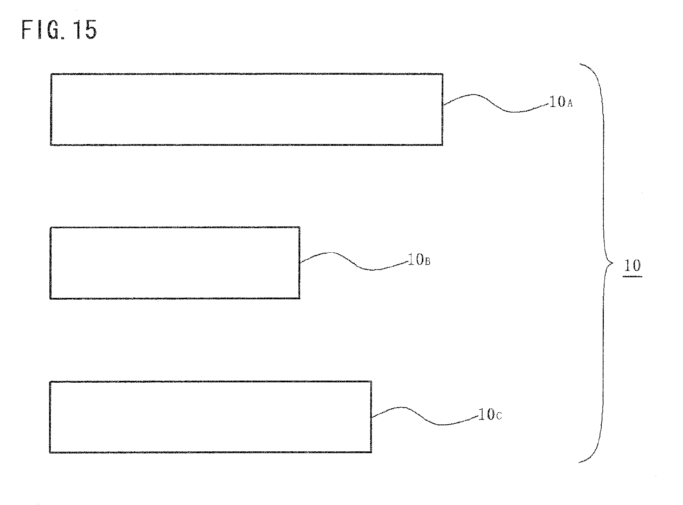

[Fig. 15] Fig. 15 is an enlarged plan view of reflection light amount adjusting members having different sizes from each other.

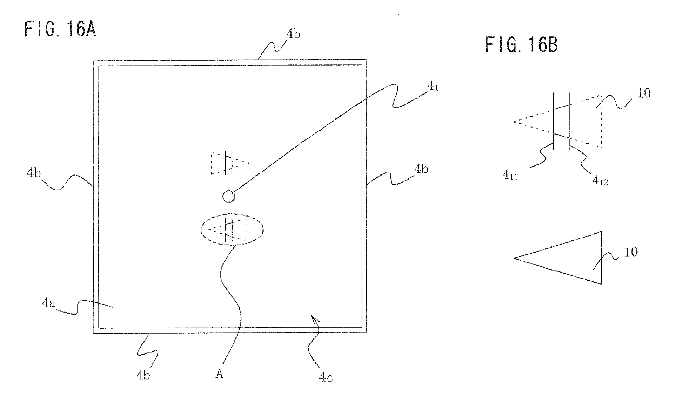

[Fig. 16] Fig. 16 illustrates one cell in the casing provided with the reflection light amount adjusting member, Fig. 16A being a top plan view of one cell in the casing provided with the reflection light amount adjusting member and Fig. 16B being an enlarged view of the portion A in Fig. 16A and also a plan view of the reflection light amount adjusting member.

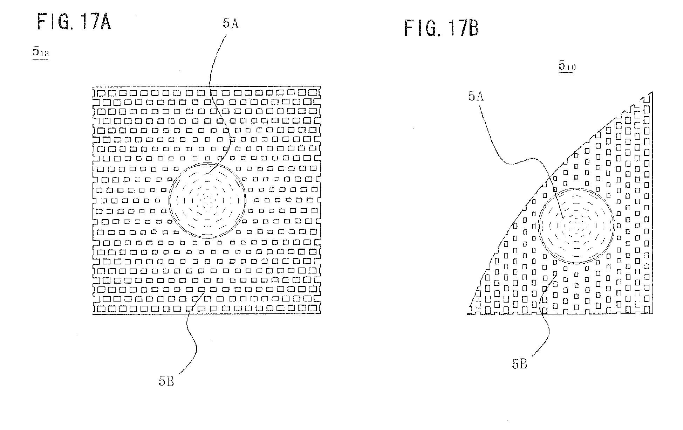

[Fig. 17] Fig. 17 illustrates the transmissive/reflective member, Fig. 17A being a plan view of a small transmissive/reflective member obtained by sub-dividing the transmissive/reflective member and Fig. 17B being a plan view of another small transmissive/reflective member obtained by sub-dividing the transmissive/reflective member.
[Fig. 18] Fig. 18 illustrates a conventional surface lighting device, Fig. 18A being a vertical sectional view of the surface lighting device and Fig. 18B being a plan view of the surface lighting device in Fig. 18A.
[Fig. 19] Fig. 19 illustrates another conventional surface lighting device, Fig. 19A being a plan view of the surface lighting device and Fig. 19B being a perspective view of the surface lighting device in Fig. 19A.

### BEST MODE(S) FOR CARRYING OUT THE INVENTION

Embodiments of the present invention will be described below with reference to the accompanying drawings. It should be noted that the embodiments presented below exemplify a color correction method for illumination light, a light source module using this color correction method, and a lighting device including the light source module, each of which implements a technological concept of the present invention. The embodiments are not intended to limit the present invention thereto, and the present invention can be equally applied to other embodiments falling within the scope of the appended claims. In addition, the color correction method for illumination light can be applied to a color changing method capable of changing the color of illumination light by replacing a part of the members to be used. It is possible to apply the color changing method to a light source module to constitute a lighting device. Furthermore, this lighting device can be used as various display devices.

A color correction method for illumination light according to a first embodiment of the present invention will be described with reference to Fig. 1. Fig. 1 is a block diagram illustrating a color correction method for illumination light according to this embodiment of the present invention.

The color correction method for illumination light according to the first embodiment of the present invention includes a plurality of (four pieces of, for example) light source modules LS1 to LS4 and corrects the color of several light source modules so as to provide uniform illumination light of the same color from the lighting device LS as a whole. It should be noted that the number of light source modules is not limited to four and it can be one to three or more than four. Four light source modules LS1 to LS4 each have a point light source L and a light source equation unit D₂ equating light emitted from the point light source by reflecting the light on a reflective member. Furthermore, out of the light source modules LS1 to LS4, for example, two light source modules LS1 and LS3 that requires color correction are provided with color correcting members D₁ correcting a spectrum of the light emitted from the point light sources L. The color correcting members each are a member capable of correcting the color of light to be emitted from the light source module. This member is provided with an adjusting unit. The point light source L includes an LED or a laser diode. As the light source equation unit D₂, a transmissive/reflective member described later (refer to Fig. 6) is used.

A color correction method for illumination light for a light source module with an LED emitting white light will be described with reference to Figs. 10 and 11. Fig. 10 is the x-y chromaticity diagram of the CIE color system. Fig. 11 is a partially enlarged view of the x-y chromaticity diagram in Fig. 10. It should be noted that the light emitted from the LED has a spectrum corresponding to a color with a plurality of wavelength components.

A commercial LED may emit light of a color within a region surrounded by the curve of the x-y chromaticity diagram in Fig. 10. In this chromaticity diagram, an area W corresponds to an area of white light. The area W is further divided into a plurality of sub-areas, for example, as illustrated in Fig. 11, a cool white area W1, a neutral white area W2, and a warm white area W3. In addition, each of the sub-areas W1 to W3 is further divided into divisions a₁ to a₄ and b₁ to b₄. In the fragmented each division or bin, an LED corresponding to each bin emits white light with a plurality of wavelength components. An apparatus manufacturer has no option but to use such commercial LEDs. In the case that such white light LEDs, which are corresponding to different bins from each other or from different LED manufactures, are obtained, the specific characteristics of the LEDs are different from each other. Thus, loss of color balance between the light source modules can occur if four light source modules LS1 to LS4 are equipped with the LEDs having different specific characteristics from each other. As mentioned above, for example, one LED may provide white tinted with blue, and another LED may provide white tinted with yellow, which makes it difficult to provide desirable white illumination light due to contamination of colors other than white.

A color correction method using a color correcting member D₁ will be described with reference to Figs. 2 to 4 and 10.
Fig. 2A shows a spectrum of a white light LED. As illustrated in Fig. 2A, the white light LED emits white light that is synthesized light including a blue emission spectrum of the LED element and an emission spectrum of a phosphor, which is excited by the blue emission spectrum, emitting yellow light.
Each of the LEDs installed in the light source modules LS1 and LS3 has a spectrum shown in Fig. 2B. White light tinted with blue is emitted as a whole because intensity of wavelength of light exhibiting yellow is a bit weak in the spectrum of the LEDs installed in the light source modules LS1 and LS3. Each of the light source modules LS1 and LS3 is provided with a color correcting member D₁ to correct the white light tinted with blue to white light similar to the white light emitted from the LEDs installed in the light source modules LS2 and LS4. The color correcting members D₁ change the white light tinted with blue to white light by absorbing blue wavelengths.

The light that is emitted from the LEDs installed in the light source modules LS1 and LS3 and is reflected by the color correcting members D₁ is turned to have the spectrum shown in Fig. 3A. This is because blue light is absorbed in the color correcting members D₁. The rest of the light directly emitted from the light source modules LS1 and LS3 without being reflected by the color correcting members D₁ is light having the spectrum shown in Fig. 2B.

The light emitted from the light source modules LS1 and LS3 is reflected and diffused a number of times in the casing and is emitted from the transmissive/reflective member. Thus, a part of the light emitted from the light source modules LS1 and LS3 and is reflected by the color correcting members D₁ and the other part of the light not reflected are emitted from the casing uniformly to be recognized as light with the spectrum shown in Fig. 3B. That is, as blue wavelength light is absorbed, the synthesized light can be seen as white light because blue wavelength light is reduced.

By contrast, it is possible to get white light tinted with yellow close to white light by absorption of yellow wavelength light. In that case, the color correcting members D₁ are provided to the light source modules LS2 and LS4, which emits more yellowish light than the light source modules LS1 and LS3, rather than the light source modules LS1 and LS3. Accordingly, the surface lighting device can provide uniform illumination light as a whole.

A member colored in a color having a spectrum indicating a complementary color of the spectrum of the light emitted from each LED that is installed in the light source modules LS3 and LS3 is used as each of the color correcting member D₁ to provide white light. In this embodiment, a complementary color of a corresponding color represented on the x-y chromaticity diagram in Fig. 10 is defined as follows. That is, the complementary color is represented with coordinates of the intersection of a half-line, on which coordinates indicating the corresponding color and coordinates (x=1/3, y=1/3) indicating white light exist, and a spectrum locus or the purple boundary. By using the color correcting member colored in a color that is represented with the coordinates between the coordinates indicating this complementary color and the coordinates indicating white light, it is possible to correct the color of light emitted from the surface lighting device to white light. For the spectrum of light of white tinted with blue, the color correcting member colored in yellow having complementary relationship with the spectrum provides white light, for example. A spectrum of a color of the color correcting member farther from white light, in other words, a color closer to the complementary color Can make the color correcting member smaller.

A colored member having any shape and any size such as a colored sheet material or a colored adhesive tape material is used as the color correcting member D₁. The size of the color correcting member D₁ is adjusted in response to the amount of color correction for the spectrum of the light emitted from the point light source L installed in the corresponding light source module. The color correcting member D₁ is attached on a reflection surface such as a reflective member. The size of the color correcting member D₁ is adjusted as follows. First, light from each of the light source modules is measured. Then, an exposed area on the reflection surface in the light source module is changed in accordance with the measured value. With the adjusting method, configuration of the size of the color correcting member D₁, or the exposed area on the reflection surface can be complicated. For this reason, it is preferable to provide an adjusting unit that allows adjustment. Commercial products can be used as the color correcting members and thus they are inexpensive and easily available. Accordingly, it is possible to perform color correction easily.

When a phosphor is used as the color correcting member D₁, it is possible to suppress the drop of brightness while the spectrum is changed. Fig. 4 shows a spectrum of the light reflected by the color correcting member D₁ including a yellow phosphor. When electrons in the phosphor having been excited by light with short wavelengths emitted from the LED or blue light return to a ground state, light with long wavelengths, that is, yellow light, is emitted in this case. Besides absorbing light, a phosphor emits light. Accordingly, it is possible to suppress reduction of brightness than the case without a phosphor.

The color correcting method for illumination light is also applicable to a color changing method for the color of illumination light by replacing a part of the members to be used with another colored member instead of the complementary colored member, for example. The color changing method will be described with reference to Fig. 10.
A color correcting member colored in a color represented by a coordinate point Ac on a half-line on a linear line passing through a coordinate point A0 in which a spectrum of the light emitted from the LED installed in the light source module LS1 is indicated in the x-y chromaticity diagram and a coordinate point Aa in which a spectrum of a desired color is indicated in the x-y chromaticity diagram and extending from the coordinate point Aa to the opposite side of the coordinate point A0 can be used for changing a color to the desired color. Any color represented by the coordinates on the half-line is acceptable. The more distance between the coordinate point A0 and the coordinate point Ac makes the degree of color change larger for the same area. Thus, it is possible to reduce the size of the color correcting member. In addition, it is possible to constitute a light source module using this color changing method and is also possible to constitute a lighting device including the light source module.

A configuration of a light source module using this color changing method for illumination light and a lighting device including a plurality of light source modules will be described with reference to Figs. 5 to 9. Fig. 5 is an overall perspective view of a lighting device having a plurality of light source modules according to the embodiment of the present invention. Fig. 6 is an exploded perspective view of the lighting device in Fig. 5. Fig. 7 is an exploded perspective view of one of the light source modules constituting the lighting device in Fig. 5. Fig. 9 is a plan view of a transmissive/reflective member in Fig. 6.
As illustrated in Figs. 5 and 6, a lighting device 1 includes a plurality of (four pieces of, for example) light source modules 2A to 2D, and a diffusive member 6 disposed with a predetermined gap over the light source modules adjacently arranged. The diffusive member 6 is formed as one panel and is shared by the light source modules. Each of the light source modules 2A to 2D has the same structure.

The light source module 2A will be described with reference to Fig. 7. The light source module 2A includes a point light source 3, a casing 4 having a thin box shape accommodating therein the point light source 3 on the center of its bottom plate and provided with an opening, a transmissive/reflective member 5 covering the opening of the casing and emitting illumination light, and a diffusive member 6A disposed with a predetermined gap over a light emission surface of the transmissive/reflective member. The diffusive member 6A is a part of the diffusive member 6 depicted in Fig. 5.

The point light source 3 may be a light emitting diode (LED) having a single light emitting element or an assembly of a plurality of light emitting elements, a laser diode, or an assembly of either the light emitting diode or the laser diode with a lens. An explanation will be made with the case using an LED.

The casing 4 is a casing having a thin box shape that includes a bottom plate 4a having a predetermined area with a substantially square shape, a side wall part 4b standing to a predetermined height from a periphery of the bottom plate 4a and having an upper side defining an opening 4c. The bottom plate 4a is drilled a penetrating hole 4₁ to expose a light emitting portion of an LED 3 at substantially the center thereof. Inner walls of the bottom plate 4a and the side wall part 4b are provided with reflection surfaces reflecting light. The casing 4 is formed of a material having high reflectance, low transmittance and low absorptance of light, such as an ultra-fine foamed light reflection panel. As the ultra-fine foamed light reflection panel, there is a material with a reflectance of 98%, a transmittance of 1%, and an absorptance of 1%. Other materials, such as emulsified particulates of titanium white, and emulsified particulates of polytetrafluoroethylene can be applied or screen-printed to the casing 4. The size of the casing 4 is as follows, for example: the length of an edge of the bottom plate 4a is 200 mm; the height of the side wall part 4b is 14 mm; and the thickness of the bottom plate 4a and the side wall part 4b is 1.0 mm.

As illustrated in Fig. 9, the transmissive/reflective member 5 has a center reflective portion 5A just above the LED 3 and has an outer reflective portion 5B around the center reflective portion 5A. The transmissive/reflective member 5 is formed in a square plate having a predetermined thickness and edges of the same length. The length of each edge on the transmissive/reflective member 5 is equal to that of each edge on the bottom plate 4a of the casing 4. Like the casing 4, the transmissive/reflective member 5 is formed of a material having high reflectance, low transmittance and low absorptance of light, such as an ultra-fine foamed light reflection panel. It is possible to reduce the loss of light emitted from the light source if the casing and the transmissive/reflective member have the material having high reflectance, low transmittance and low absorptance of light. In addition, it is possible to increase efficiency of utilization of light because light is reflected multiply and effectively between the casing 4 and the transmissive/reflective member 5.

The center reflective portion 5A has a central reflective area 5a with a small area located just above the LED 3 and opposing to the light emitting portion of the LED 3 when the transmissive/reflective member 5 is attached to the casing 4 to cover the opening 4c, and has an area within a predetermined distance from the central reflective area 5a as the center of the area, namely, a pericentral reflective area 5a'. The central reflective area 5a is irradiated with the light having the strongest intensity emitted from the LED 3 and the pericentral reflective area 5a' is irradiated with the light having the second strongest intensity in accordance with the spectral curve of the LED 3. Thus, the central reflective area 5a is designed so that transmittance of light is low and reflectance of light is high. This design may be achieved by appropriately selecting a material of the transmissive/reflective member and processing (forming a half groove, adjusting the plate thickness, etc.), for example. The pericentral reflective area is designed so as to have the second highest reflectance following the central reflective area 5a and to have partial permeability of light.

Light may pass through small holes or slits, microgrooves, etc. When the small holes are used, as the area of the center reflective portion 5A is small, pitches between the small holes are shorter by half than that of openings described later, for example. The small holes in the pericentral reflective area 5a' are arranged at regular intervals in a grid pattern. In addition, each of the corners on the border between the central reflective area 5a and the pericentral reflective area 5a' is provided with a single small hole so that the central reflective area 5a becomes substantially circle. The openings of the outer reflective portion 5B that are the nearest to the pericentral reflective area are in common with the small holes of the pericentral reflective area 5a'. Thus, it is possible to provide uniform illumination light without leaving a bright spot in the center reflective portion 5A or darkening just above it.

The outer reflective portion 5B is composed of a plurality of openings arranged from the pericentral reflective area 5a' of the center reflective portion 5A toward each edge with predetermined regularity. The openings are penetrating holes that penetrate the outer reflective portion 5B. In other words, they are the openings of the reflection/emission surface.

In the state illustrated in Fig. 9, each of the openings is located at a respective point of intersection of a plurality of horizontal lines, which are arranged at regular intervals and parallel to one edge, and a plurality of vertical lines which are arranged at the same regular intervals and perpendicular to the above-mentioned edge. These intervals are the same with each other. Thus, the plurality of openings are arranged at equal intervals with regularity of matrix (grid). There is another regular arrangement such as a trefoil formation. With this arrangement, the holes on the second row adjacent to the first row are located between the holes on the first row. By contrast, the grid arrangement has the same pitches in the horizontal and the vertical directions, and thus, the amount of the light emitted to the horizontal direction and the amount of the light emitted to the vertical direction are the same. Therefore, it is possible to provide more uniform illumination light as a whole.

A known light diffusing material can be used as the diffusive member 6A, an explanation thereof will be omitted. The lighting device 1 has a plurality of light source modules 2A to 2D having the structure mentioned above. As described above, however, LEDs installed in these light source modules each have different specific characteristics. Thus, uniform illumination light of the same color sometimes could not be obtained. For this reason, the color correcting member correcting a spectrum of the light emitted from the LEDs is installed in at least one or more, or all of the light source modules.

The color correcting member will be described with reference to Fig. 8. Fig. 8A is a plan view of the casing having the color correcting member. Fig. 8B is an enlarged view of a part A in Fig. 8A and is a top plan view of the color correcting member. Fig. 8C is top plan views of bottom plates of the casing each having a colored stamp instead of the color correcting member.

As a color correcting member 7, a material colored in a color represented by a spectrum having a complementary color relationship with the light emitted from the LED 3 installed in the light source module is used. In addition, as the color correcting member 7, a colored member having any size and shape, for example, a colored sheet material or a colored adhesive tape material is used. The color correcting member 7 is installed on the inner wall of the casing 4 with an adjusted size in response to the amount of color correction complementing a spectrum of the light emitted from the LED 3 installed in the light source modules. The size of the color correcting member 7 is adjusted as following. First, light from each of the light source modules is measured. Then, an exposed area on the reflection surface in the light source module is changed in accordance with the measured value. With the adjusting method, configuration of the size of the color correcting member 7, or the exposed area on the casing can be complicated. For this reason, it is preferable to provide an adjusting unit that allows adjustment. Fig. 8B illustrates its example.

The color correcting member 7 in Fig. 5B is formed in a triangular thin leaf from a sheet material. The thin leaf thus formed is installed on a portion between a pair of slits 4₁₁ and 4₁₂ formed on a peripheral of the penetrating hole 4₁ on the bottom plate 4a of the casing 4 so that the triangular thin leaf is capable of moving slidably and a part of the triangular thin leaf is exposed. This contrivance to the installation makes the adjustment easy because the exposed area is changed by sliding the thin leaf.

As illustrated in Fig. 8C, a colored stamp instead of the color correcting member may be marked on the bottom plate to color it in a particular color. Thus, it is possible to adjust color of the light source modules easily. In addition, light emitted from the single light source module has no unevenness of color, and more uniform illumination light can be obtained by marking a colored pattern coaxially or radially around the LED 3. The color correcting member is installed on the bottom plate in this embodiment. By contrast, it is possible to obtain the same effect by installing the color correcting member in the same way on the side wall part or inside of the transmissive/reflective member.

This lighting device includes an assembly of the plurality of light source modules, and is possible to provide uniform surface light of the same color from the lighting device as a whole by installing the color correcting member on the light source modules even if there are LEDs having different specific characteristics installed in the light source modules. It is possible to use a colored material having any shape and size such as a colored sheet material or a colored adhesive tape material as a color correcting member. Thus, commercial products can be used as a color correcting member and it is possible to perform color correction easily. The lighting device can be replaced with a color changeable lighting device that is possible to change the color of light by replacing a part of the members to be used with, for example, another colored member instead of the complementary colored member.

A second embodiment of the present invention will be described with reference to Figs. 12 to 15. The common parts with the first embodiment are given the same reference numerals for explanations. Fig. 12 is a perspective view of an exterior of a lighting device according to the second embodiment of the present invention. Fig. 13 is an exploded perspective view of the lighting device in Fig. 12. Fig. 14 is a top plan view of a status that the transmissive/reflective member is attached to the casing of the lighting device in Fig. 13. Fig. 15 is an enlarged plan view of reflection light amount adjusting members having different sizes from each other. In Fig. 14, it should be noted that the transmissive/reflective member is excised a part thereof so that the cell in the casing can be seen.
As illustrated in Figs. 12 to 14, a lighting device 1A according to the second embodiment of the present invention includes: a casing 4A provided with a plurality of point light sources 3 and an opening; a transmissive/reflective member 5 covering the opening of the casing and transmitting and reflecting light; a diffusive member 6A of the transmissive/reflective member; and a lid 11 provided with a diffusive member 6A covering the opening of the casing 4A and disposed with a predetermined gap over a light emission surface.

As the point light source 3, an LED or a laser diode is used, for example. An LED may be composed of a single LED element or a plurality of elements integrated.
In addition, an LED not only emitting white light but also emitting the three primary colors, or R (red), G (green), and B (blue) can be used. A laser diode provided with a lens and so on at its light emission portion can be used.
An explanation will be made with the case using an LED through this embodiment.

As illustrated in Figs. 13 and 14, the casing 4A is composed of a thin box shape includes: a bottom plate 4a having a relatively large area with a substantially elliptically shape; and a side wall part 4b standing to a predetermined height from a periphery of the bottom plate 4a and defining an opening 4c on the upper side of the side wall part. The casing 4A may be formed of a metal plate or a workpiece of resin. The inner walls, or the inner walls of the bottom plate 4a and the side wall part 4b each may be formed of a reflective member.

Reflective members 8c may be formed of a material that light absorption and light transmission are quite low and light reflectance is high or formed of a material capable of irregular reflection besides above characteristics, such as an ultra-fine foamed light reflection panel. There is an ultra-fine foamed light reflection panel with light reflectance of 98%, light transmittance of 1%, and light absorptance of 1%. Such a panel is preferable. Other materials, such as emulsified particulates of titanium white, and emulsified particulates of polytetrafluoroethylene can be used. It should be noted that these materials may be coated on the casing by applying or screen-printing. The shape of the casing is not limited to elliptic shape. Any shape such as a circle, a polygon, or a rectangle is applicable to the casing.

The casing 4A may be molded integrally with or separately from the reflective members. When molded separately, in particular to a small case made of a metal plate, an inner wall of the bottom plate and an inner wall of the side wall part are composed of the same reflective member mentioned above. It should be noted that the reflective member 8c on the side wall part is composed of the same material of partitions.

As illustrated in Fig. 14, the interior of the casing 4A is divided into cells by a reflective partition member 8 assembled in a grid pattern. The reflective partition member 8 is structured as follows: a plurality of partitions whose height from the bottom plate 4a is a bit lower than that of the side wall part 4b are arranged in parallel. The plurality of partitions are crossed with other plurality of partitions being arranged same way so as to form cells with a predetermine size at cross sections. In other words, as the state illustrated in Fig. 14, the reflective partition member 8 is consisted of an assembled body in a grid pattern that is assembled from partitions 8a aligned in horizontal and partitions 8b aligned in vertical so as to form the cells with a predetermined size at the cross sections.

If the partitions 8a and 8b of the reflective partition member 8 are extended as they are, cells latter described that are formed at adjacent the side wall part become significantly small because the casing 4A has an elliptic shape. Thus, the partitions 8a' and 8b' whose lengths are different are used as the partitions on the side of the side wall part. The inner surfaces of the bottom plate and side wall part of the casing 4A are formed with the reflective members 8c. The reflective members 8c consist of the same material with the partitions. As the partitions, reflective members with significantly low absorptance and transmittance besides high reflectance that reflect light at random are used. It is preferable that the material same with the casing be used for the reflective member. By using the same material, it is possible to make the casing and the partitions from a single material. Thereby, production of them becomes easy.

The reflective partition member 8 with a grid pattern is accommodated in the casing 4A. When the casing accommodates the reflective partition member 8, a plurality of cells 9₁ to 9₁₈ are formed therein. The cells 9₁ to 9₁₈ are classified as follows: the cells 9₁₃ to 9₁₈ in the center portion surrounded by the bottom plate and the partitions; and the cells 9₁ to 9₁₂ along the side wall part surrounded by the bottom plate, the partitions, and the side wall part. These cells are provided with openings at their ceiling part. The openings are small apertures that subdivide an opening 2c of the casing. In the reflective partition member 8 with a grid pattern, height of each partition is lower than that of the side wall part. Thus, the top of the partitions, or ceiling opened portions are served as a fixing base on which the transmissive/reflective member 5 is placed. The interior of the casing 4A is divided with the reflective partition member 8 into a plurality of cells. Each cell, however, may be provided at manufacturing of the casing integrated with the reflective partition member 8.

The casing 4A is provided with the penetrating holes 4₁ at substantially the centers of respective cells 9₁ to 9₁₈ to expose and fix a light emitting portion of the LED 3. The penetrating holes 4₁ may be formed on the bottom plate in advance. The LED 3 is fixed to a mounting plate (not illustrated) and then mounted on the back side of the casing so that each light emitting portion of the LED 3 is exposed in respective cells.

The cells 9₁ to 9₁₈ are formed in the casing 4A by dividing the interior of the casing 4A with the reflective partition member 8. The cells 9₁ to 9₁₈ are classified as follows: the cells 9₁₃ to 9₁₈ formed in a cuboid with a substantially square surface in the center portion; and the cells 9₁ to 9₁₂ formed in a non-cuboid. The sizes or the volumes of the cells 9₁₃ to 9₁₈ in the center portion and the cells 9₁ to 9₁₂ along the side wall part are different. Thus, the amounts of light per unit area of the cells along the side wall part and the cells in the center portion are different due to the difference of the volumes if LEDs having the same specified characteristics are installed in these cells.

The intensity of illumination emitted from the cell with a small volume or the cells 9₁ to 9₁₂ may be high. For this reason, the cells 9₁ to 9₁₂ are provided with reflection light amount adjusting members 10_{A} to 10_{C} so as to adjust the amounts of light. Sheet members with high absorptance such as black sheet materials absorbing the light emitted from the LED 3 are used as the reflection light amount adjusting members 10_{A} to 10_{C}. The reflection light amount adjusting members 10_{A} to 10_{C} with predetermined sizes corresponding to a size (volume) of each cell are attached on the inner wall of each cell by adhering or the like in the following manner. For example, as illustrated in Fig. 15, the reflection light amount adjusting members 10_{A} and 10_{C} with a large size are applied to the small cells. By contrast, the reflection light amount adjusting members 10_{B} with a small size are applied to the large cells. That is, the reflection light amount adjusting members 10_{A} to 10_{C} are attached on the corresponding cells with a different exposed area.

The sizes of the reflection light amount adjusting members 10_{A} and 10_{C}, or the exposed areas for respective cells are selected or adjusted with measuring of illumination. In order to make the adjustment easy, it is preferred to perform the adjustment by an exposure adjusting member that is installed on the bottom plate or the side wall part and adjusts the exposed area in the cells. By using the color correcting member in the first embodiment instead of the reflection light amount adjusting member, variation of each color of illumination light from each cell can be disappeared and the illumination light with the same color can be obtained easily without any special countermeasures on elements of an LED. In addition, by using a colored member other than a complementary colored member, the color of illumination light can be changed and a decorative effect can be exhibited.

The reflection light amount adjusting member and the exposure adjusting member will be described with reference to Fig. 16. Fig. 16A is a top plan view of one cell in the casing provided with the reflection light amount adjusting member. Fig. 16B is an enlarged view of the portion A in Fig. 16A and also is a plan view of the reflection light amount adjusting member.
It is possible to use an absorptive material having any shape and size such as a black sheet material or a black adhesive tape material as the reflection light amount adjusting member 10. The size of each reflection light amount adjusting member is adjusted in response to the size of each cell as follows and the resulting member is attached to the inner wall of the casing 4. Specifically, light from each of the cells is measured, and an exposed area on the inner wall of the casing 4 is changed in accordance with the measured value.

The reflection light amount adjusting member 10 in Fig. 16B is formed in a triangular thin leaf from a sheet material. The thin leaf thus formed is installed on a portion between the pair of slits 4₁₁ and 4₁₂ formed on a peripheral of the penetrating hole 4₁ on the bottom plate 4a of the casing 4A so that the triangular thin leaf is capable of moving slidably and a part of the triangular thin leaf is exposed. This contrivance to the installation makes the adjustment easy because the exposed area is changed by sliding the thin leaf. In addition, it is possible to use an absorptive material having any shape and size such as a black sheet material or a black adhesive tape material as the reflection light amount adjusting member 7. Thus, commercial products can be used as a reflection light amount adjusting member and is easily used.

As described previously, the reflection light amount adjusting members are disposed on the cells along the side wall part because such cells have relatively smaller than the cells in the center portion. If LEDs to be used have variation of specified characteristics, the amounts of light per unit area can be different even in the cells in the center portion. Thus, it is preferable that the cells in the center portion be provided with the reflection light amount adjusting member.

In this embodiment, it is described that the interior of the casing 4A is divided with the partitions and is provided with a plurality of cells. However, it is possible to adjust the amount of light easy, even if a casing is not divided with partitions, by providing the reflection light amount adjusting member. In the case that the casing has a non-rectangular shape, it is difficult to align the plurality of LEDs with proper balance at equal intervals. In that case, it is possible to adjust the amount of the light by providing the reflection light amount adjusting member.

The transmissive/reflective member will be described with reference to Figs. 13 and 17. Fig. 17 illustrates the transmissive/reflective member. Fig. 17A is a plan view of a small transmissive/reflective member obtained by sub-dividing the transmissive/reflective member. Fig. 17B is a plan view of another small transmissive/reflective member obtained by sub-dividing the transmissive/reflective member.
As illustrated in Fig. 13, a transmissive/reflective member 57 includes small derivative/reflective members 5₁ to 5₁₈ disposed on places corresponding to the cells 9₁ to 9₁₈, respectively, and reflects and transmits light emitted from LED 3 in each cell. Each small derivative/reflective members 5₁ to 5₁₈ has the same composition. As each of the cells 9₁ to 9₁₂ along the side wall part 4b has a relatively small opening, the small derivative/reflective members corresponding to the cells mentioned above have small shapes. Like the casing 4A, the transmissive/reflective member 5 is formed of a material having high reflectance, low transmittance and low absorptance of light, such as an ultra-fine foamed light reflection panel. It is possible to reduce the loss of light emitted from the light source if the casing and the transmissive/reflective member have the material having high reflectance, low transmittance and low absorptance of light. In addition, it is possible to increase efficiency of utilization of light because light is reflected multiply and effectively between the casing and the transmissive/reflective member.

A small transmissive/reflective member which is denoted by the reference numeral 5₁₃ and is matched with each of the cells 9₁ to 9₁₈ will be described. The transmissive/reflective member 5₁₃ has a center reflective portion 5A just above the LED 3 and has an outer reflective portion 5B around the center reflective portion 5A. The transmissive/reflective member 5₁₃ is formed in a square plate having a predetermined thickness and edges of the same length. The length of each edge on the transmissive/reflective member 5₁₃ is equal to that of each edge on each cell mentioned above.

The center reflective portion 5A has a central reflective area with a small area that is located just above the LED 3 and opposing to the light emitting portion of the LED 3 when the transmissive/reflective member 5₁₃ is attached to the opening of the cell. The center reflective portion 5A is irradiated with the light having the strongest intensity emitted from the LED 3 in accordance with the luminous intensity distribution. Thus, the central reflective portion 5A is designed so that transmittance of light is low and reflectance of light is high. This design may select a material of the transmissive/reflective member and determine a process (forming a half groove, adjustment of plate thickness, etc.), for example. Thus, it is possible to provide uniform illumination light without leaving a bright spot in the center reflective portion 5A or darkening just above it.

The outer reflective portion 5B is composed of a plurality of openings arranged toward each edge with predetermined regularity. The openings are penetrating holes that penetrate the outer reflective portion 5B. In other words, they are the openings of the reflection/emission surface.
The plurality of openings are arranged at equal intervals with regularity of matrix (grid). The grid arrangement has the same pitches in the horizontal and the vertical directions, and thus, the amount of the light emitted to the horizontal direction and the amount of the light emitted to the vertical direction are equal.

Like the transmissive/reflective member 5₁₃, another small transmissive/reflective member 5₁₀ is a plate with a predetermined thickness having the center reflective portion 5A opposing to LED 3 and the outer reflective portion 5B around the center reflective portion 5A. Each of the cells along the side wall part 4b has relatively small opening. Thus the small transmissive/reflective member 5₁₀ has the shape of the opening of corresponding cell. Each of the small transmissive/reflective members 5₁ to 5₉, 5₁₁, and 5₁₂ has the shape of the opening of corresponding cell.

The lid 11 formed in an elliptical shape includes a lid opening 11a that is a bit smaller than the opening of the casing 4A and includes a lid trim 11b surrounding the lid opening 11a, and is made of the same material as the box-casing. The diffusive member 6A is attached to the lid trim 11b so as to seal the lid opening 11a. It is possible to use a publicly known diffusive material as the diffusive member 6A, thus an explanation in detail is omitted.

With the illumination apparatus in this embodiment, light emitted from the cell disposed with the reflection light amount adjusting member out of the plurality of cells is adjusted. This allows performing comprehensive adjustment on the light against light emitted from the other cells. Thus, it is possible to obtain illumination light with uniform brightness. It should be noted that, by using the color correcting member correcting the color temperature of an LED in each cell instead of the reflection light amount adjusting member, variation of each color of illumination light from each cell can be disappeared and the illumination light with the same color can be obtained easily without any special countermeasures on elements constituting an LED. In addition, by using a colored member other than a complementary colored member, the color of illumination light can be changed and a decorative effect can be exhibited.

### EXPLANATION OF REFERENCE NUMERALS

- 1, 1A: lighting apparatus
- 2A to 2D: light source modules
- 3: LED (point light source)
- 4, 4A: casing
- 5: transmissive/reflective member
- 6, 6A: diffusive member
- 7, 7A, D₁: color correcting member
- D₂: light source equation unit
- LS1: to LS4 light source modules
- 8: reflective partition member
- 9₁ to 9₁₈: cells
- 10, 10_{A} to 10_{C}: reflection light amount adjusting member
- 11: lid

## Claims

1. A color correction method for illumination light comprising:
providing a plurality of light source modules;
adjusting illumination light from the light source modules so as to be the same color; and
emitting uniform illumination light of the same color entirely,
each of the light source modules including: a point light source emitting light of a color having a plurality of wavelength components; a casing accommodating therein the point light source, provided with an opening, and having an interior with a reflection surface; and an optical reflective member covering the opening of the casing and emitting uniform surface illumination light,
the light source modules being equipped with a color correcting member adjusting a spectrum of the light emitted from the corresponding point light source depending on necessity of color adjustment, the color correcting member being irradiated with the light emitted from the point light source and light reflected and adjusting a spectrum of the incident light into a desired spectrum, so that the color of the illumination light is corrected to be the same as that from the other light source modules and the light source modules emit uniform illumination light.

2. The color correction method according to claim 1, wherein the color correcting member includes a member colored in a color represented by coordinates on a half-line on a linear line passing through first coordinates in which the spectrum of the point light source in the x-y chromaticity diagram of the Commission Internationale de l'Eclairage (CIE) standard colorimetric system is indicated and second coordinates in which a desired color in the x-y chromaticity diagram of the CIE standard colorimetric system is indicated, and extending from the second coordinates indicating the desired color to the opposite side of the first coordinates indicating the spectrum of the point light source.

3. The color correction method according to claim 1, wherein the color correcting member changes the size of an irradiated area irradiated with the light emitted from the point light source and the light reflected so as to adjust the amount of color correction.

4. The color correction method according to any one of claims 1 to 3, wherein the point light source is a light emitting diode or a laser diode.

5. A light source module comprising:
a point light source emitting light of a color having a plurality of wavelength components;
a casing accommodating therein the point light source, provided with an opening, and having an interior with a reflection surface; and
a transmissive/reflective member covering the opening of the casing and emitting uniform surface illumination light,
the casing being equipped with a color correcting member arranged therein and adjusting a spectrum of the light emitted from the point light source.

6. The light source module according to claim 5, wherein the color correcting member includes a member colored in a color represented by coordinates on a half-line on a linear line passing through first coordinates in which the spectrum of the point light source in the x-y chromaticity diagram of the Commission Internationale de l'Eclairage (CIE) standard colorimetric system is indicated and second coordinates in which a desired color in the x-y chromaticity diagram of the CIE standard colorimetric system is indicated, and extending from the second coordinates indicating the desired color to the opposite side of the first coordinates indicating the spectrum of the point light source.

7. The light source module according to claim 5, wherein the color correcting member is connected to an adjusting unit for changing the size of an irradiated area irradiated with the light emitted from the point light source and the light reflected so as to adjust an amount of color correction.

8. The light source module according to any one of claims 5 to 7, wherein the point light source is a light emitting diode or a laser diode.

9. A lighting device comprising:
a plurality of light source modules,
the lighting device changing a color of light emitted from each of the light source modules into a desired color and emitting illumination light, and
the light source modules being any one of the light source modules according to claims 5 to 8.

10. A lighting device comprising:
a plurality of light source modules,
the lighting device changing a color of light emitted from each of the light source modules into the same color and emitting uniform illumination light,
each of the light source modules including:
a first light source module having a point light source emitting light of a color having a plurality of wavelength components, a casing accommodating therein the point light source, provided with an opening, and having an interior with a reflection surface, and an optical reflective member covering the opening of the casing and emitting uniform surface illumination light; and
a second light source module that is any one of the light source modules according to claims 5 to 8.

11. The lighting device according to claim 10, wherein the optical reflective member is comprised of a common member with the first and the second light source modules.

12. A lighting device comprising:
a point light source;
a box-shaped casing having a bottom plate to which the point light source is fixed, a side wall part standing to a predetermined height from a periphery of the bottom plate and defining an opening on an upper side thereof, and an inner wall with a reflective member;
a transmissive/reflective member covering the opening of the casing and reflecting and transmitting the light emitted from the point light source; and
a diffusive member disposed over the transmissive/reflective member with a gap therebetween,
the casing being provided with a plurality of such point light sources that are arranged with predetermined intervals on the bottom plate, and provided with a reflection light amount adjusting member that is disposed on a peripheral part around at least one of the point light sources and adjusts an amount of light reflected by the peripheral part.

13. The lighting device according to claim 12, wherein an interior of the casing is partitioned into a plurality of cells with small openings subdividing the opening of the casing with a partition reflective member that is a reflective member standing to a predetermined height from the bottom plate,
the point light sources are disposed in the respective cells, and
the reflection light amount adjusting member is disposed in at least one of the cells.

14. The lighting device according to claim 12, wherein the reflection light amount adjusting member is a color correcting member correcting a spectrum of light emitted from the point light sources.

15. The lighting device according to claim 12, wherein the reflection light amount adjusting member is a reflection light amount adjusting member adjusting the amount of light reflected by the peripheral part around the point light source(s).

16. The lighting device according to claim 12, wherein the shapes of the casing and the cells are not similar, and
a cell with a smaller capacity out of the cells is equipped with the reflection light amount adjusting member.

17. The lighting device according to claim 12, wherein the reflection light amount adjusting member is made of an optically absorptive material for absorbing light.

18. The lighting device according to claim 17, wherein the optically absorptive material is a sheet material.

19. The lighting device according to claim 12, wherein the reflection light amount adjusting member is connected to an adjusting unit capable of adjusting an exposed area on the inner wall of the casing.

20. The lighting device according to claim 12, wherein the transmissive/reflective member includes a center reflective portion just above the corresponding point light source and an outer reflective portion around the center reflective portion,
the center reflective portion has high reflectance, and
the outer reflective portion is provided with a plurality of light transmission holes or light transmission slits penetrating the outer reflective portion.

21. The lighting device according to any one of 12 to 20, wherein both the casing and the transmissive/reflective member are formed of an ultra-fine foamed material.
